# EUROPÄISCHE PATENTANMELDUNG

(11) **EP 0 673 733 A2**
(43) Veröffentlichungstag der Anmeldung: **27.09.1995**
(21) Anmeldenummer: 95103205.1
(22) Anmeldetag: 07.03.1995
(51) Int. Cl.: B28B 17/02, B28B 11/04, B28B 1/50, B28C 5/38, C04B 38/10, E04F 17/02, E04G 9/06, C04B 41/50

(54) **Verfahren zur Herstellung einer porösen, mineralischen Leicht-Dämmplatte**

(30) Priorität: 10.03.1994 DE 4408088
(71) Anmelder: Veit Dennert KG Baustoffbetriebe, D-96130 Schlüsselfeld (DE)
(72) Erfinder: Dennert, Veit, Dr., D-96047 Bamberg (DE); Dennert, Frank, D-96120 Bischberg (DE)
(74) Vertreter: Rau, Manfred, Dr. Dipl.-Ing.

(57) **Zusammenfassung**

Ein Verfahren zur Herstellung einer porösen mineralischen Leicht-Dämmplatte weist folgende Verfahrensschritte auf:
- Herstellen einer Bindemittelschlämme aus Zement, Quarzmehl, Kalkhydrat und Wasser,
- Herstellen eines Schaumes aus Wasser, Druckluft und einem Luftporenbildner,
- Vermischen der Bindemittelschlämme und des Schaumes zu einer Schaumbetonmasse,
- Homogenisieren der Schaumbetonmasse mittels eines Durchlaufmischers (Statikmischer 20),
- Ausbringen des Schaumbetons in eine Form (Formkasten 23) zur Bildung eines Formkuchens für die Leicht-Dämmplatte,
- Ansteifen des Formkuchens,
- Zuschnitt des Formkuchens in einzelne Leicht-Dämmplatten und
- Aushärtung der Leicht-Dämmplatte in einem Autoklaven.

## Beschreibung

Die Erfindung betrifft ein Verfahren zur Herstellung einer porösen, mineralischen Leicht-Dämmplatte, wie sie z.B. als Ersatz für geschäumte Polystyrol-Platten oder Mineralplatten als Vollwärmeschutz fuhr Gebäude verwendet werden kann.

Aus dem Stand der Technik ist es bekannt, sogenannte Gas- oder Porenbetonsteine herzustellen, die eine Dichte von einigen 100 kg/m³ aufweisen. Aufgrund ihrer Porenstruktur sind diese Porenbetonsteine gut wärmedämmfähig.

Grob umrissen werden solche Porenbetonsteine aus einer Bindemittelschlämme (mit Kalk oder Zement als Bindemittel) hergestellt, die durch Versetzen mit einem Treibmittel auf der Basis einer Aluminiumverbindung aufgeschäumt wird. Hierbei ist problematisch, daß sich bei dieser Herstellungsweise in der Regel ein Dichtegradient von unten nach oben sowie Mikrorisse in der Steinstruktur durch das Auftreiben ergeben können. Darüber hinaus ist die Dosierung der Aluminiumverbindung sehr kritisch. Die Herstellung extrem stark porosierter Massen mit Rohdichten unter 200 kg/m³ ist nahezu unmöglich.

Aufgrund der vorstehenden Umstände ist es daher auch praktisch nicht möglich, mit den für die Herstellung von Porenbetonsteinen verwendeten Verfahren mineralische Leicht-Dämmplatten herzustellen, die eine Rohdichte von 100 bis 200 kg/m³ und darunter aufweisen müssen, um mit geschäumtem Polysterol-Platten vergleichbare Wärmedämmeigenschaften zu besitzen.

Versuche haben nämlich gezeigt, daß das für die Herstellung von Porenbetonsteinen geeignete Verfahren bei einem entsprechend stärkerem Auftreiben der Bindemittelschlämme zu Leicht-Dämmplatten führt, die in erster Linie keine genügende Strukturstabilität aufweisen.

Aus der DE 41 18 537 C1 ist ein Verfahren zur Herstellung von Zementschaum bekannt, mit dem jedoch nur Schaumdichten von 250 bis 400 kg/m³ erreichbar sind. Diese Schaumdichten sind - wie bereits erörtert - zu hoch, um die gewünschten Wärmedämmeigenschaften der aus einem solchen Zementschaum hergestellten Dämmplatte zu erzielen.

Aus der DE 42 16 204 A1 ist ferner eine poröse mineralische Leicht-Dämmplatte bekannt, die im wesentlichen aus Kalziumsilikathydrat, Siliciumdioxid und gegebenenfalls einem porösen Zuschlag besteht und die mit einem derartigen Porenanteil und einer derartigen Porenverteilung hergestellt ist, daß sie ein spezifisches Gewicht unter 220 kg/m³ und einen Wärmeleitfähigkeitsmeßwert unter 0,050 W/mK hat. Zu den Bestandteilen dieser Wärmedammplatte ist ausgeführt, daß der Kalziumsilikathydrat-Bestandteil vorzugsweise auf dem Vorhandensein von gelöschtem Kalk, Siliciumdioxid und Wasser im Herstellungs-Ausgangsmaterial beruht. Alternativ kann mit einem Anteil gebranntem Kalk gearbeitet werden, der während der Herstellung durch Wasseraufnahme hydratisiert wird. Der Siliciumdioxid-Bestandteil der erfindungsgemäßen Wärmedämmplatte besteht vorzugsweise im wesentlichen aus Quarzsand und/oder amorpher Kieselsäure.

Zur Porenbildung ist der DE 42 16 204 A1 entnehmbar, daß man im nassen Herstellungsmaterial enthaltenes Wasser während des Erhärtens zum Verdampfen bringt bzw. daß bereits im Herstellungsmaterial mit Hilfe eines Porenbildungsmittels Poren gebildet werden, die dann in den fertigen Wärmedämmplatten enthalten sind. Als bevorzugte Porenbildungsmittel sind Tenside, Aluminiumpulver oder Peroxoverbindungen genannt. Zumindest bei der Verwendung von Aluminiumpulver dürften sich die bereits eingangs erwähnten Probleme ergeben. Darüber hinaus haben Versuche des Anmelders gezeigt, daß es bei der Anwendung allgemein bekannter Herstellungsverfahren für die Wärmedämmplatten nach DE 42 16 204 A1 praktische Probleme gibt, Wärmedämmplatten mit dem dort angegegebenen spezifischen Gewicht und Wärmeleitfähigkeitsmeßwert zu erhalten, die die notwendige Strukturstabilität für eine einwandfreie Verbaubarkeit auf der Baustelle aufweisen. Ansätze zur Lösung dieser Problematik sind der DE 42 16 204 A1 nicht entnehmbar.

Ein weiteres Problem bei den Wärmedämmplatten gemaß dieser Druckschrift besteht in der Wasseraufnahme dieser Wärmedämmplatten während des Transports, der Lagerung und der Verbauung in einem Gebäude. So ist der Druckschrift zwar entnehmbar, daß die Wärmedämmplatten auf ihrer Oberfläche mit einem Wasserabweismittel versehen sind, das durch Anstreichen oder Aufsprühen aufgebracht wurde. Es ist nun grundsätzlich erforderlich, daß an einer Gebäudewand angebrachte Wärmedämmplatten vor dem Aufbringen einer in der Regel dünnen Putzschicht an ihrer Oberfläche verrieben werden müssen, um Höhenunterschiede im Bereich der Plattenstöße auszugleichen. Bei diesem Verreiben z.B. mit einem sogenannten Reibebrett wird die oberste Schicht der Wärmedämmplatte und damit das sich auf der Oberfläche befindliche Wasserabweismittel entfernt, so daß die Platte an den verriebenen Stellen Feuchtigkeit aufsaugen kann. Dies bedeutet, daß die Platten der anschließend aufgebrachten Putzschicht Wasser entziehen, was zu Inhomogenitäten in der Putzschicht und einer die Wärmedämmfähigkeit herabsetzenden Durchfeuchtung der Platte führt. Auch wird bei einer Durchfeuchtung die Frostbeständigkeit der Platten beeinträchtigt.

Die ältere Patentanmeldung P 43 27 074.3 beschäftigt sich mit einem Verfahren zur Herstellung einer mineralischen Leicht-Dämmplatte, bei dem in einem sogenannten Paddelrührwerk eine Bindemittelschlämme aus den üblichen Bestandteilen Wasser, Quarzmehl, Kalkhydrat und Zement angerührt und anschließend ein in einer Schaumerzeugungseinheit hergestellter Schaum eingerührt wird. Mit dem damit hergestellten Schaumbeton konnten zwar mineralische Leicht-Dämmplatten mit einer Dichte im Bereich zwischen 100 und 200 kg/m³ und einer Wärmeleitzahl von ca. 0,05 hergestellt werden, die in ihrer Strukturstabilität und Homogenität in begrenztem Umfang verbessert waren, jedoch noch immer nicht die für einen bedenkenlosen Praxiseinsatz notwendigen Eigenschaften hinsichtlich Festigkeit, Wärmedämmfähigkeit und wasserabweisendem Verhalten zeigten.

Der Erfindung liegt demzufolge die Aufgabe zugrunde, ein Verfahren zur Herstellung einer porösen mineralischen Leicht-Dämmplatte anzugeben, die aufgrund ihrer herstellungsbedingt hohen Festigkeit und guten Wärmedämmeigenschaften den praktischen Anforderungen bei der Verbauung genügt.

Diese Aufgabe wird durch das im Patentanspruch 1 angegebene Verfahren gelöst. Als tragende Merkmale der Erfindung werden dabei die getrennte Herstellung einer Bindemittelschlämme und eines Schaumes, das Vermischen dieser beiden Komponenten zu einer Schaumbetonmasse und insbesondere deren Homogenisieren mittels eines Durchlaufmischers angesehen. Versuche haben nämlich gezeigt, daß bei Verwendung dieser Verfahrensabfolge ein besonders homogener Schaumbeton mit feinen Luftporen gebildet wird, der nach der Autoklavbehandlung zu einer besonders festen und hochwärmedämmfähigen Platte führt. Als Grund hierfür wird die besonders schonende Homogenisierung in dem verwendeten Durchlaufmischer gesehen, bei dem es sich vorzugsweise um einen sogenannten Statikmischer (Anspruch 3) handelt, wie er in der chemischen Industrie in vielerlei Anwendungsfällen eingesetzt wird. Kennzeichnend bei solchen Durchlauf- oder Statikmischern ist die Tatsache, daß darin keine sich drehenden Teile vorhanden sind, die durch ihren Impuls Kräfte auf den Schaumbeton ausüben, die zu einer Zerstörung der Poren führen könnten. Vielmehr wird in dem Durchlauf- oder Statikmischer die Homogenisierung durch statische Leitelemente hervorgerufen, die zu Turbulenzen im Schaumbeton bei dessen Durchpumpen führen. Dies stellt offensichtlich eine besonders schonende Homogenisierungsweise dar, die zu den hervorragenden Eigenschaften der damit hergestellten Leicht-Dämmplatten führt.

Die im Anspruch 2 angegebene Vermischung der Bindemittelschlämme und des Schaumes mit Hilfe eines Y-förmig verzweigten Mischrohres ist einerseits verfahrenstechnisch besonders einfach, andererseits führt sie jedoch zu einer für die weitere Homogenisierung in dem Durchlauf- bzw. Statikmischer ausreichende Vorvermischung der Schaumbeton-Bestandteile.

Die Ansprüche 4 bis 7 betreffen eine Endbehandlung der autoklavisierten Leicht-Dämmplatten, wonach diese mit einer wasserabweisenden und/oder härtenden Imprägnierung versehen werden. Das Besondere an dieser Imprägnierung ist die Tatsache, daß das Aufbringen der Imprägnierung so vonstatten geht, daß diese sich ausgehend von der Plattenoberfläche über eine gewisse Eindringtiefe - mindestens 1,5 cm werden als vorteilhaft angesehen - nach innen erstreckt. Mit Hilfe dieser Imprägnierung, wie sie in den auf die Leicht-Dämmplatte selbst gerichteten Ansprüchen 10 bis 13 angegeben ist, werden verschiedene Effekte erzielt:
- Durch die in die Tiefe gehende Imprägnierung können die Leicht-Dämmplatten an ihrer Oberfläche verrieben werden, ohne daß eine Beeinträchtigung der wasserabweisenden Eigenschaften der Imprägnierung stattfindet. Damit findet die nach dem Anbringen der Leicht-Dämmplatten an eine Gebäudewand aufzutragende Putzschicht über die Oberfläche der Platten konstante wasserabweisende Eigenschaften vor, so daß kein ungleichmäßiger Wasserentzug aus der Putzschicht in die Dämmplatte hinein stattfinden kann und die Frostbeständigkeit nicht beeinträchtigt wird.
- Durch die Imprägnierungsschichten an allen Oberflächen der Dämmplatte ist diese hervorragend gegen eindringendes Wasser geschützt, so daß beispielsweise bei einer offenen Lagerung der Dämmplatten auf der Baustelle keine Durchfeuchtung der Platten zu befürchten ist. Die erfindungsgemäßen Leicht-Dämmplatten stellen also keine besonderen Anforderungen an eine geschützte Lagerung.
- Durch die Härtung der Plattenoberflächen sind diese besonders gut gegen Eindrücken geschützt, so daß im Umgang mit den Platten beim Verbauen auf der Baustelle keine besondere Sorgfalt anzuwenden ist.
- Durch die allseitige Imprägnierung der Platte bilden sich im Bereich einander abgewandter Plattenflächen steife Schichten aus, die zwischen sich eine Schicht geringerer Festigkeit einschließen. Die Leicht-Dämmplatte weist also einen Strukturaufbau auf, der dem einer Mehrschicht-Verbundplatte ähnelt. Dies führt in der von dort bekannten Weise zu einer erheblichen Festigkeitserhöhung der Platte, wobei insbesondere die Biegezugfestigkeit steigt.
- Durch die Härtung der Platte in einer Oberflächenzone können besonders gut Dübel in der Platte verankert werden.
- Durch die Einfärbung der Imprägnierschicht z.B. mit Eisenoxid-Farbe ist eine optimale Kontrollierbarkeit der Platten dahingehend gegeben, daß beim Verreiben zum Einebnen von Plattenstössen oder beim Zerschneiden von Platten etwa bei Fensterausschnitten zutage tretende nicht-imprägnierte Plattenzonen sofort erkennbar sind und dann nachimprägniert werden können.

Grundsätzlich ist das Imprägniermittel durch Über- oder Unterdruck in die Platte einbringbar. Insbesondere das Überdruckverfahren ist von der Druckimprägnierung von Holzbauteilen her bekannt. In der Anwendung bei den erfindungsgemäßen Leicht-Dämmplatten ist das Druckimprägnieren bei Einhaltung bestimmter Grenzen des Maximaldruckes und der Geschwindigkeit, mit der die Druckbeaufschlagung und -entlastung erfolgt, zwar anwendbar, jedoch nicht unproblematisch. So kann das in einem Tauchbecken durch Druck in die Platte eingedrungende Imprägniermittel bei der Druckentlastung durch die Reexpansion der im Platten-Inneren eingeschlossenen Porenluft wieder ausgetrieben werden, so daß die Imprägnierung zu wünschen übrig läßt. Auch neigen die Platten insbesondere bei einer zu schnellen Druckentlastung dazu, explosionsartig zerstört zu werden, da die Plattenporen bei der Druckentlastung eine hohe Expansionstendenz zeigen. Nicht zuletzt ist die für das Überdruckimprägnieren notwendige Apparatur konstruktiv sehr aufwendig, da Überdruckwerte von mehreren bar beherrscht werden müssen.

Aufgrund der vorstehenden Umstände ist dem Unterdruckimprägnieren der Vorzug zu geben, da hierbei die Platten auf strukturschonende Weise imprägniert werden. Nähere Ausführungen hierzu ergeben sich aus dem Ausführungsbeispiel, worauf zur Vermeidung unnötiger Wiederholungen verwiesen wird.

Wie in den Ansprüchen 8 und 9 angegeben ist, können in die Bindemittelschlämme zusätzliche Siliciumdioxid-Träger bzw. zusätzliche Glasfasern eingemischt werden. Bei den zusätzlichen Siliciumdioxid-Trägern kann es sich z.B. um sogenannte "mikrosilica"-Partikel handeln, wie sie als Betonzusatzmittel im Handel erhältlich sind. Die Glasfasern, die optional zur weiteren Festigkeitserhöhung der Dämmplatte eingemischt werden können, sind alkaliresistent und weisen eine bevorzugte Faserlänge zwischen 6 mm und 12 mm auf.

Weitere Merkmale, Einzelheiten und Vorteile der Erfindung sind der nachfolgenden Beschreibung entnehmbar, in der Ausführungsbeispiele für das erfindungsgemäße Verfahren sowie die erfindungsgemäße Dämmplatte anhand der beigefügten Zeichnungen näher erläutert werden. Es zeigen
- Fig. 1: eine schematische Teildarstellung der ein erfindungsgemäßes Herstellungsverfahren benutzenden Anlage und
- Fig. 2: einen schematischen Schnitt durch eine erfindungsgemäße Leicht-Dämmplatte.

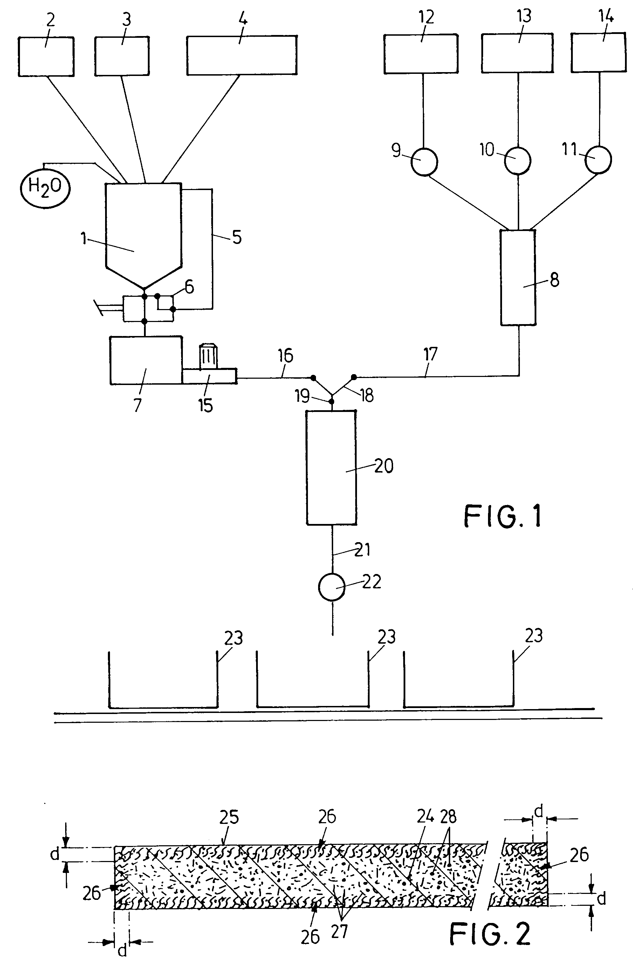

Unter Bezugnahme auf Fig. 1 wird zuerst die Herstellung des Schaumbetons für die Leicht-Dämmplatte erörtert. In einem üblichen Kolloidalmischer 1, der z.B. mit einem Paddelrührwerk versehen ist, wird eine Bindemittelschlämme aus Zement, Quarzmehl, Kalkhydrat und Wasser hergestellt. Die festen Bestandteile können von entsprechenden Silos 2, 3, 4 über nicht näher dargestellte Fördereinrichtungen, wie z.B. Schneckenförderern unter Zuwiegen automatisch in den Kolloidalmischer 1 zusammen mit einer entsprechenden Menge von heißem Wasser (Temperatur ungefähr 40 bis 50°C) eingebracht werden. Zusätzlich können Glasfasern und/oder spezielle Siliciumdioxid-Träger eingemischt werden. Folgende Grundrezeptur kann für die Bindemittelschlämme verwendet werden:
30 kg Zement
15 kg Kalkhydrat
50 kg Quarzmehl
2 kg alkaliresistente Glasfasern (Faserlänge zwischen 6 mm und 12 mm)
60 l Wasser.

Diese Mischung wird im Kolloidalmischer 1 bei gleichzeitigem Umpumpen über die Rücklaufleitung 5, die über das 3-Wege-Ventil 6 mit dem Auslaß des Kolloidalmischers 1 verbunden ist, gemischt. Nach einer homogenen Durchmischung der Komponenten der Bindemittelschlämme wird das 3-Wege-Ventil 6 umgesteuert, so daß die Bindemittelschlämme in den Zwischenbehälter 7 ausgebracht wird.

In einem parallelen Anlagenzweig wird einer handelsüblichen Schaumkanone 8 über Dosierventile 9, 10, 11 aus entsprechenden Reservoirs 12, 13, 14 Wasser, Luftporenbildner auf Proteinbasis und Druckluft zugeführt. Bei der Schaumkanone 8 handelt es sich beispielsweise um den Typ SG-E2 der Firma Würschum, Ostfildern, DE, mit der ein sehr feinporiger Proteinschaum erzeugt wird.

Vom Zwischenbehälter 7 geht unter Zwischenschaltung einer Förderpumpe 15 eine erste Speiseleitung 16 sowie von der Schaumkanone 8 eine zweite Speiseleitung 17 ab. Diese Speiseleitungen 16, 17 werden über ein Y-förmig verzweigtes Mischrohr 18 vereinigt, mit dessen ausgangsseitigen Anschlußstutzen 19 ein Statikmischer 20 verbunden ist. Durch das Mischrohr 18 wird also der Bindemittelschlämme-Strom in der Speiseleitung 16 mit dem Schaum-Strom in der Speiseleitung 17 vermischt, wobei der Bindemittelschlämme-Strom durch die Förderpumpe 15 und der Schaum-Strom durch entsprechende Betätigung der Dosierventile 9, 10, 11 erzeugt werden.

Die durch das Vermischen der beiden vorgenannten Komponenten im Mischrohr 18 hergestellte Schaumbetonmasse wird weiter durch den Statikmischer 20 gefördert, wo eine gründliche Homogenisierung der Schaumbetonmasse erfolgt.

Der Statikmischer 20 ist ausgangsseitig mit einem Ausgaberohr 21 verbunden, in dem ein Ventil 22 zur Steuerung des Ausflusses der Schaumbetonmasse eingesetzt ist.

Diese Schaumbetonmasse ist durch eine entsprechende Auswahl des Förderverhältnisses zwischen Bindemittelschlämme-Strom und Schaum-Strom so eingestellt, daß die damit hergestellte Leicht-Dämmplatte eine Dichte von etwa 100 kg/m³ im trockenen Endzustand aufweist.

Bei dem Statikmischer 20 handelt es sich beispielsweise um einen Mischer des Typs SMF-DM50/3-674.9i34 der Firma Sulzer AG, Winterthur, CH. Es sind auch andere Mischertypen einsetzbar wie z.B. SNX-Mischer der vorgenannten Firma. Bei der Mischerauswahl ist darauf zu achten, daß der Durchmesser des Statikmischers auf die Strömungsgeschwindigkeiten im Mischrohr abgestimmt sind. Die richtige Auslegung des Durchlaufmischers läßt sich durch einfache Versuche ermitteln.

Über das Ausgaberohr 21 können jeweils Formkästen 23 mit der Schaumbetonmasse gefüllt werden. Die Formkästen 23, die als sogenannte "Reifeformen'' dienen, sind nach Art einer Springform ausgebildet und bestehen aus einem Boden und vier verschiebbaren Seitenwänden.

Die mit der Schaumbetonmasse gefüllten Formkästen 23 werden über eine übliche Schiebebühne in eine Reifekammer transportiert, wo sie bei ca. 50°C über einer Zeit von etwa 6 bis 12 Stunden verweilen. Dadurch steift die Schaumbetonmasse an, so daß der durch den Formkasten 23 gebildete Formkuchen anschließend ohne Hilfe des Formkastens 23 standfest ist.

Nach der Reifekammer werden nun die Formkästen 23 in einer weiteren Bearbeitungslinie entfernt, indem mittels eines Spezialgreifers die Form geöffnet wird. Dabei spreizen sich alle vier Seitenwände vom angesteiften Formkuchen auf eine Distanz von ca. 1 cm zur Seite weg. Die so geöffneten Seitenwände werden nach oben abgehoben, seitlich verfahren, gesäubert, geölt und wieder mit Formböden zusammengefügt.

Der auf dem Bodenblech des Formkastens 23 freistehende Formkuchen wird in der Bearbeitungslinie zur Beschneidungsstation weitertransportiert. In der Beschneidungsstation findet ein erster Rohzuschnitt des Formkuchens durch oszillierende Drähte im Bereich der Ober- und Unterseite des Formkuchens statt. Wenn der Kuchenüberschuß an der Oberseite abgenommen worden ist, hat der verbleibende Formkuchen eine glatte Oberfläche. Durch den Schnitt im Bereich der Unterseite können sich der Formkuchen bzw. die daraus geschnittenen Platten später besser vom Bodenblech lösen.

Anschließend wird der so zugeschnittene Formkuchen zur sogenannten Harfe weiterverfahren, in der der Kuchen über oszillierende Drähte in einzelne Platten geschnitten wird. Dies erfolgt dadurch, daß die Drahtharfe den stehenden Kuchen von oben nach unten durchfährt.

Mittels eines Vakuumgreifers werden die Platten vom Bodenblech abgehoben und auf einen Härtewagen abgesetzt, wobei durch eine entsprechende Greifersteuerung die Platten mit einem gegenseitigen Abstand von 3-5 mm auf dem Härtewagen abgesetzt werden. Durch diese Distanz wird ein schnelleres und gleichmäßigeres Härten und Austrocknen der Platten während und nach der Autoklavbehandlung ermöglicht.

Nach dem Einfahren der so besetzten Härtewägen in einen Autoklaven werden die Platten in einer Sattdampf-Atmosphäre von ca. 16 bar und 220°C über eine Zeit von wenigen Stunden gehärtet und anschließend wieder entnommen.

Die gehärteten Platten können anschließend nochmals auf ihr Endmaß - z.B. mit Hilfe einer Bandsäge - zugeschnitten werden.

Anschließend erfolgt die Imprägnierung der Platten. Dazu wird ein Satz von beispielsweise 15 Platten mittels entsprechender Greifer in ein Tauchbecken eingesetzt, das mit einem Imprägniermittel gefüllt ist. Die Platten werden dabei vollständig in das Imprägniermittel eingetaucht. Anschließend wird das Tauchbecken luftdicht verschlossen und mit Unterdruck beaufschlagt. Dadurch perlt die in dem offenporigen Gefüge der Platten befindliche Luft aus und wird abgesaugt. Wird nun das Tauchbecken wieder belüftet und auf Normaldruck gebracht, so wird das die Platten umgebende Imprägniermittel in die Platte eingesogen. Es bildet sich also eine von allen Plattenoberflächen ausgehende Imprägniermittelschicht, die eine Eindringtiefe d von etwa 2 cm nach innen aufweisen kann. Auch eine völlige Durchtränkung der Platten ist möglich.

Bei dem Imprägniermittel kann es sich um eine Mischung auf der Basis von modifiziertem Wasserglas, einem Hydrophobierungsmittel und Wasser gemäß folgender Rezeptur handeln:
99 l modifiziertes Wasserglas Typ 14 der Fa. Wöllner GmbH, 67065 Ludwigshafen
1 l Hydrophierungsmittel Typ BS 1306 der Fa. Wacker Chemie, 80538 München, DE und
200 l Wasser.

Alternativ dazu kann das Imprägniermittel auch auf der Basis von aushärtenden, hydrophoben Kunststoff-Dispersionen hergestellt werden. Als Beispiel für eine solche Dispersion sei das entsprechende Produkt "Vinapas" (R) der Fa. Wacker Chemie, 80538 München, DE genannt.

Die imprägnierten Platten können in einer Trockenstation mit Heißluft getrocknet werden. Hierbei ist ein Anblasen der Platten mit Heißluft von unten her vorzuziehen, da dabei die Beschichtung von der Unterseite her austrocknet und ein Ankleben der Platten auf Paletten, auf die die Platten später gesetzt werden, dadurch vermieden wird.

Wie in Fig. 2 dargestellt ist, kann eine erfindungsgemäß Leicht-Dämmplatte aus einem offenporigen Schaumbetonkörper 24 mit flacher, quaderförmiger Gestalt bestehen, der auf die oben beschriebene Weise hergestellt wurde. Der Schaumbetonkörper 24 weist eine allseitig von seiner Oberfläche 25 sich nach innen erstreckende Imprägnierschicht 26 zur Härtung und zur Erzielung eines wasserabweisenden Effektes auf. Die Imprägnierschicht weist eine Eindringtiefe d von etwa 2 cm auf. Durch eine Einfärbung des Imprägniermittels mit Eisenoxid-Farbe ist die Imprägnierschicht farblich vom übrigen Plattenmaterial abgesetzt. Weiterhin sind in die Leicht-Dämmplatte Glasfasern 27 und sogenannte Siliziumdioxid-Träger 28 eingebracht.

## Patentansprüche

1. Verfahren zur Herstellung einer porösen mineralischen Leicht-Dämmplatte mit folgenden Verfahrensschritten:
- Herstellen einer Bindemittelschlämme aus Zement, Quarzmehl, Kalkhydrat und Wasser vorzugsweise in einem Kolloidalmischer (1),
- Herstellen eines Schaumes in einer Schaumerzeugungseinheit (Schaumkanone 8) aus Wasser, Druckluft und einem Luftporenbildner,
- Vermischen der Bindemittelschlämme und des Schaumes zu einer Schaumbetonmasse,
- Homogenisieren der Schaumbetonmasse mittels eines Durchlaufmischers (Statikmischer 20),
- Ausbringen der Schaumbetonmasse in eine Form (Formkasten 23) zur Bildung eines Formkuchens für die Leicht-Dämmplatte,
- Ansteifen des Formkuchens vorzugsweise in einer Reifekammer,
- Zuschnitt des Formkuchens in einzelne Leicht-Dämmplatten und
- Aushärtung der Leicht-Dämmplatten in einem Autoklaven.

2. Verfahren nach Anspruch 1, dadurch gekennzeichnet, daß das Vermischen der Bindemittelschlämme und des Schaumes durch Vereinigen eines in einem ersten Rohr (Speiseleitung 16) geführten Bindemittelschlämme-Stromes und eines in einem zweiten Rohr (Speiseleitung 14) geführten Schaum-Stromes über ein Y-förmig verzweigtes Mischrohr (18) erfolgt.

3. Verfahren nach Anspruch 1 oder 2, dadurch gekennzeichnet, daß die Homogenisierung der Schaumbetonmasse mittels Durchpumpen durch einen als Statikmischer (20) ausgebildeten Durchlaufmischer erfolgt.

4. Verfahren nach einem der Ansprüche 1 bis 3, dadurch gekennzeichnet, daß die autoklavisierten Leicht-Dämmplatten mit einer wasserabweisenden und/oder härtenden Imprägnierung (Imprägnierschicht 26) versehen werden, die sich ausgehend von der Plattenoberfläche (25) über eine Eindringtiefe (d) von vorzugsweise mindestens 1,5 cm nach innen erstreckt.

5. Verfahren nach Anspruch 4, dadurch gekennzeichnet, daß das Imprägniermittel mittels Über- oder Unterdruck in die Leicht-Dämmplatte eingebracht wird.

6. Verfahren nach Anspruch 5, dadurch gekennzeichnet, daß zum Unterdruck-Imprägnieren die Leicht-Dämmplatte in ein mit flüssigem Imprägniermittel gefülltes, in einem druckdicht verschließbaren Gefäß angeordnetes Tauchbecken eingebracht wird, daß das Gefäß zum Entfernen der Luft aus den Plattenporen mit Unterdruck beaufschlagt und anschließend zum Einbringen der Imprägnierflüssigkeit in die Leicht-Dämmplatte wieder belüftet wird.

7. Verfahren nach einem der Ansprüche 4 bis 6, dadurch gekennzeichnet, daß die Platten nach dem Imprägnieren mittels Heißluft getrocknet werden.

8. Verfahren nach einem der Ansprüche 1 bis 7, dadurch gekennzeichnet, daß in die Bindemittelschlämme zusätzlich Siliziumdioxid-Träger (28) eingemischt werden.

9. Verfahren nach einem der Ansprüche 1 bis 8, dadurch gekennzeichnet, daß in die Bindemittelschlämme zusätzlich Glasfasern (27) eingemischt werden.

10. Poröse, mineralische Leicht-Dämmplatte, bestehend aus einem hydraulisch ausgehärtetem Schaumbeton aus Zement, Quarzmehl, Kalkhydrat und Wasser einerseits und Schaum andererseits, dadurch gekennzeichnet, daß die Leicht-Dämmplatte zumindest in ihren der Oberfläche (25) benachbarten Zonen mit einer hydrophoben und/oder härtenden Imprägnierung (Imprägnierschicht 26) versehen ist.

11. Leicht-Dämmplatte nach Anspruch 10, dadurch gekennzeichnet, daß die Imprägnierung (Imprägnierschicht 26) sich über eine Eindringtiefe (d) von mindestens 1,5 cm erstreckt.

12. Leicht-Dämmplatte nach Anspruch 10 oder 11, dadurch gekennzeichnet, daß das Imprägniermittel aus Wasserglas, einer Dispersion, einem Vernetzungsmittel und Wasser sowie gegebenenfalls einem Hydrophobierungsmittel besteht.

13. Leicht-Dämmplatte nach einem der Ansprüche 10 bis 12, dadurch gekennzeichnet, daß das Imprägniermittel eingefärbt ist.

14. Leicht-Dämmplatte nach einem der Ansprüche 10 bis 13, dadurch gekennzeichnet, daß die Leicht-Dämmplatte eine Dichte von maximal 150 kg/m³ und eine Wärmeleitzahl von maximal 0,05 aufweist.
